# EUROPÄISCHE PATENTSCHRIFT

(11) **EP 3 075 477 B1**
(45) Veröffentlichungstag und Bekanntmachung des Hinweises auf die Patenterteilung: **26.09.2018**
(21) Anmeldenummer: 15000949.6
(22) Anmeldetag: 01.04.2015
(51) Int. Cl.: B23C 5/22, B27G 13/04

(54) **FRÄSWERKZEUG UND SCHNEIDELEMENT ZUR VERWENDUNG IN EINEM FRÄSWERKZEUG**
MILLING TOOL AND CUTTING ELEMENT FOR USE IN A MILLING TOOL
OUTIL DE FRAISAGE ET ÉLÉMENT DE COUPE UTILISÉ DANS UN OUTIL DE FRAISAGE

(43) Veröffentlichungstag der Anmeldung: 05.10.2016
(73) Patentinhaber: Ledermann GmbH & Co. KG, 72160 Horb a. N. (DE)
(72) Erfinder: Westfal, Ewald, DE-72351 Geislingen (DE); Sitzler, Benjamin, DE-72172 Sulz am Neckar (DE); Hampel, Steffen, DE-72108 Rottenburg (DE)
(74) Vertreter: Zurhorst, Stefan

(56) Entgegenhaltungen:
- EP-A1- 1 647 346
- EP-A1- 1 702 703
- EP-B1- 1 899 098
- WO-A1-2007/115883
- WO-A1-2009/019676
- DE-B4-102009 005 634
- DE-U1-202014 104 712
- US-A1- 2012 121 345

## Beschreibung

Die Erfindung betrifft ein Fräswerkzeug nach dem Oberbegriff des Anspruchs 1, das aus dem Dokument DE 20 2014 104 712 U1 bekannt ist, und ein Schneidelement zur Verwendung in einem Fräswerkzeug nach dem Oberbegriff des Anspruchs 7, das aus dem Dokument EP 1 647 346 A bekannt ist.

Aus der DE 20 2014 104 712 U1 ist ein Fräswerkzeug mit einer im Wesentlichen zylindrischen Außenkontur bekannt, in dessen umfangsseitiger Oberfläche eine Mehrzahl von Ausnehmungen zur Aufnahme von Schneidelementen angeordnet ist. Die in die Aufnahme eingebrachten Schneidelemente liegen flächig am Boden der Aufnahme an und sind mittels einer Schraube in der Aufnahme fixiert.

Aus der DE 10 2009 005 634 B4 ist ein vergleichbares Fräswerkzeug bekannt, bei dem ein Teil der Ausnehmung als Spanleitausnehmung genutzt wird.

Für eine gleichmäßige Oberfläche eines mit solchen Fräswerkzeugen bearbeiteten Werkstücks müssen die Überstände der Schneidkanten der einzelnen Schneiden über die Umfangsfläche des Tragkörpers hinaus genau aufeinander abgestimmt sein. Hierzu werden die zunächst mit Übermaß über die Umfangsfläche hervorstehenden Schneiden in einer speziell dafür vorgesehenen Maschine nach der Montage auf ein gemeinsames Fertigmaß zurückgeschliffen. Dadurch sind anfängliche Überstandunterschiede der verschiedenen Schneidkanten egalisiert. Nach einem Austausch eines oder mehrerer Schneidelemente, beispielsweise weil diese Schneidelemente verschlissen sind, ist die beschriebene Egalisierung der Überstandunterschiede erneut erforderlich.

Erschwerend kommt hinzu, dass sich im Betrieb am Boden der Aufnahmen und an der Bodenseite der Schneidelemente Schmutzpartikel festsetzen. Solche Schmutzpartikel, bei der Holzbearbeitung insbesondere Harzrückstände, müssen entfernt werden, bevor ein neues Schneidelement in eine Aufnahme eingesetzt werden kann. Bei einer solchen Reinigung muss darauf geachtet werden, dass die Aufnahmen nicht beschädigt werden und dass keine Unebenheiten in die Aufnahmen eingebracht werden.

Der Erfindung liegt die Aufgabe zugrunde, ein Fräswerkzeug der gattungsgemäßen Art derart weiterzubilden, dass ein gleichmäßiger Überstand der Schneidkanten über die Oberfläche des Fräswerkzeugs hinaus auf einfache Weise zu erreichen ist.

Diese Aufgabe wird durch ein Fräswerkzeug mit den Merkmalen des Anspruchs 1 gelöst.

Der Erfindung liegt des Weiteren die Aufgabe zu Grunde, ein hierfür geeignetes Schneidelement anzugeben, welches in einfacher Weise lagegenau positioniert werden kann.

Diese Aufgabe wird durch ein Schneidelement mit den Merkmalen des Anspruchs 7 gelöst.

Im erfindungsgemäßen Fräswerkzeug ist zur Positionierung der Schneidkante relativ zum Boden der Aufnahme eine Drei-Punkt-Auflage zwischen Schneidelement und Tragkörper angeordnet. Dadurch ist die Orientierung der Schneidkante des Schneidelements relativ zum Boden der Aufnahme eindeutig bestimmt ohne überbestimmt zu sein. Insbesondere der größte Abstand der Schneidkante zum Boden der Aufnahme ist durch die Drei-Punkt-Auflage eindeutig festgelegt. In der Folge ist auch der Überstand der Schneidkante über die Oberfläche des Schneidkörpers hinaus eindeutig festgelegt. Durch diese genaue Festlegung des Abstandes der Schneidkante zum Boden der Aufnahme und des Überstandes der Schneidkante über die Oberfläche des Tragkörpers hinaus lassen sich auch mehrere Schneidelemente im Tragkörper anordnen, deren Schneidkanten in gleicher Weise über die Oberfläche des Tragkörpers hinausstehen. Ein Egalisieren der Schneidkanten nach Einbringen der Schneidelemente in die Aufnahmen des Tragkörpers ist nicht erforderlich.

In einer vorteilhaften Ausführungsform der Erfindung ist vorgesehen, dass die Drei-Punkt-Auflage drei Füße an der Bodenseite des Schneidelementes umfasst. Hierdurch ist eine Reinigung der Schneidelemente vor dem Einbringen in die Aufnahmen des Tragkörpers erleichtert. Es muss lediglich der gröbste Schmutz zwischen den Füßen entfernt werden und ansonsten nur darauf geachtet werden, dass die Füße des Schneidelements an ihren Auflagepunkten sauber sind. Wenn der Boden der Aufnahme, in die ein Schneidelement eingebracht wird, an den Stellen, an denen die Füße des Schneidelements aufliegen, sauber ist, ist eine reproduzierbar gleiche Positionierung des Schneidelements und seiner zugehörigen Schneidkante im Tragkörper des Fräswerkzeugs auf schnelle und einfache Weise möglich.

In einer weiteren vorteilhaften Ausfuhrungsform der Erfindung ist vorgesehen, dass die Drei-Punkt-Auflage drei Absätze am Boden der Aufnahme des Tragkörpers umfasst. Dadurch ist die Reinigung der Aufnahme des Tragkörpers vor dem Einbringen der Schneidelemente in die Aufnahmen erleichtert. Der Boden der Aufnahme muss zwischen den Absätzen lediglich grob und nur im Bereich der drei Absätze, auf denen das Schneidelement aufliegt, gründlich gereinigt werden. Bei entsprechender Reinigung der Bodenseite des Schneidelements ist dann eine genaue Positionierung des Schneidelements und seiner zugehörigen Schneidkante in der Aufnahme des Tragkörpers auf schnelle und einfache Weise möglich. Vorteilhaft umfasst die Drei-Punkt-Auflage sowohl drei Füße an der Bodenseite des Schneidelements als auch drei Absätze am Boden der Aufnahme des Tragkörpers.

Gemäß der Erfindung ist vorgesehen, dass mindestens eine Seitenwand der Aufnahme in einem Winkel < 90° gegen den Boden der Aufnahme orientiert ist und einen keilförmigen Raum bildet, dass das Schneidelement eine keilförmige Spitze aufweist, deren Form mit der Form des keilförmigen Raums der Aufnahme korrespondiert, dass das Schneidelement eine der keilförmigen Spitze gegenüberliegende keilförmige Druckfläche aufweist, dass das Fräswerkzeug ein Befestigungselement zur Befestigung des mindestens einen Schneidelements umfasst und dass das Befestigungselement an der keilförmigen Druckfläche des Schneidelements angreift und das Schneidelement in den keilförmigen Raum der Aufnahme presst. Auf diese Weise ist eine einfache und schnelle Befestigung des Schneidelements in der Aufnahme des Tragkörpers des Fräswerkzeugs möglich. Hierbei wird das Schneidelement auf einer Seite durch das Befestigungselement fixiert. Auf einer gegenüberliegenden Seite, die eine im Querschnitt keilförmige Kante aufweist, erfolgt die Fixierung durch die Wechselwirkung der keilförmigen Kante des Schneidelements mit dem keilförmigen Raum der Aufnahme. Durch die keilförmige Druckfläche, an der das Befestigungselement angreift, wird das Schneidelement sowohl gegen den Boden der Aufnahme gedrückt, als auch in einer Ebene parallel zur Ebene des Bodens der Aufnahme in Richtung des keilförmigen Raums der Aufnahme gedrückt. Durch den oben genannten Winkel < 90° erfolgt auch hier ein Andrücken des Schneidelementes gegen den Boden der Aufnahme. Vorteilhaft sind die drei Punkte der Drei-Punkt-Auflage in den Bereichen des Befestigungselements und des keilförmigen Raums der Aufnahme des Tragkörpers angeordnet. Bei einer solchen Anordnung kann das Schneidelement auf diese Weise mit nur einem einzigen Befestigungselement im Bereich jedes der drei Punkte der Drei-Punkt-Auflage gegen den Boden der Aufnahme gedrückt werden.

In vorteilhafter Weiterbildung der Erfindung ist vorgesehen, dass das Befestigungselement eine Senkkopfschraube ist, und dass die keilförmige Druckfläche des Schneidelements eine der Form des Kopfes der Senkkopfschraube angepasste, zum Rand des Schneidelements hin offene Senkung in Form eines Kegelabschnitts ist. Auf diese Weise sind die keilförmige Druckfläche und das zugehörige Befestigungselement auf einfache Weise realisiert.

In vorteilhafter Weiterbildung der Erfindung ist vorgesehen, dass ein Punkt der Drei-Punkt-Auflage im Bereich des Befestigungselements angeordnet ist. Dadurch liegt das Schneidelement im Bereich des Befestigungselements, in dem der größte Anpressdruck des Schneidelements gegen den Boden der Aufnahme vorliegt, direkt auf dem Boden der Aufnahme auf. Auf diese Weise wird verhindert, dass das Schneidelement im Bereich des Befestigungselements unter dem Druck des Befestigungselements durchgebogen wird.

In vorteilhafter Weiterbildung des erfindungsgemäßen Schneidelements ist vorgesehen, dass das Schneidelement eine zum Rand des Schneidelements hin offene Ausnehmung zur Aufnahme des Befestigungselements aufweist, und dass die Ausnehmung einen Fuß des Schneidelements erfasst. Da die Ausnehmung zur Aufnahme des Befestigungselements zum Rand des Schneidelements hin offen ist, ist es auf einfache Weise möglich, durch das Befestigungselement Druck in eine bestimmte Richtung auf das Schneidelement auszuüben. Dadurch kann das Schneidelement mittels des Befestigungselements auf einfache Weise in den keilförmigen Raum der Aufnahme des Tragkörpers des erfindungsgemäßen Fräswerkzeugs gepresst werden. Da die Ausnehmung einen Fuß des Schneidelements erfasst, und da die Ausnehmung zur Aufnahme des Befestigungselements dient, liegt das Schneidelement im Bereich des Befestigungselements, in dem der größte Anpressdruck auf das Schneidelement durch das Befestigungselements vorliegt, direkt auf dem Boden der Aufnahme des Tragkörpers des erfindungsgemäßen Werkzeugs auf. Dadurch ist ein Durchbiegen des Schneidelements im Bereich des Befestigungselements verhindert.

In vorteilhafter Weiterbildung des erfindungsgemäßen Schneidelements ist vorgesehen, dass im Schneidelement eine Spanleitausnehmung ausgebildet ist, deren Öffnung im eingebauten Zustand des Schneidelements zur Oberfläche des Tragkörpers hin geöffnet ist. Durch die Spanleitausnehmung ist ein Spanleitraum gebildet, der ausschließlich im Schneidelement angeordnet ist. Dadurch werden die bei der Bearbeitung eines Werkstücks entstehenden Späne ausschließlich durch das Schneidelement geleitet. Dadurch ist eine Abnutzung des Tragkörpers des Fräswerkzeugs bei der Spanleitung vermieden. Der Tragkörper kann in der Folge aus leichterem und weicherem Material gefertigt sein. Eine Abnutzung des Schneidelements durch Spanleitung ist günstiger als die Abnutzung des Tragkörpers durch Spanleitung, da das Schneidelement ausgetauscht werden kann. Darüber hinaus kann das Schneidelement aus verschleißärmerem, festerem Material gefertigt werden. Da die Spanleitausnehmung ausschließlich im Schneidelement vorgesehen ist, werden die Zwischenräume zwischen Schneidelement und Tragkörper weniger stark verschmutzt. Die Späne des bearbeiteten Werkstücks werden direkt über das Schneidelement wieder vom Fräswerkzeug weg geleitet und kommen im Idealfall gar nicht erst mit dem Tragkörper des Fräswerkezugs in Berührung.

Ausführungsbeispiele der Erfindung sind nachstehend anhand der Zeichnung näher erläutert. Es zeigen:
- Fig. 1: in einer perspektivischen Darstellung ein erfindungsgemäßes Fräswerkzeug mit eingesetzten Schneidelementen,
- Fig. 2: das Fräswerkzeug nach Fig. 1 mit einer Explosionsdarstellung des Befestigungsbereiches eines einzelnen Schneidelementes zur Darstellung verschiedener Einzelheiten,
- Fig. 3: in einer Detailansicht gemäß der in Fig. 1 mit III gekennzeichneten Schnittfläche eine erste Ausführungsform eines Schneidelements, das mittels eines Befestigungselements in einer Aufnahme befestigt ist,
- Fig. 4: in einer perspektivischen Darstellung das im Fräswerkzeug nach den Fig. 1 bis 3 verwendete Schneidelement und
- Fig. 5: in einer perspektivischen Darstellung eine alternative Ausführungsform eines Schneidelements mit Füßen an seiner Unterseite zur Verwendung in einem erfindungsgemäßen Fräswerkzeug.

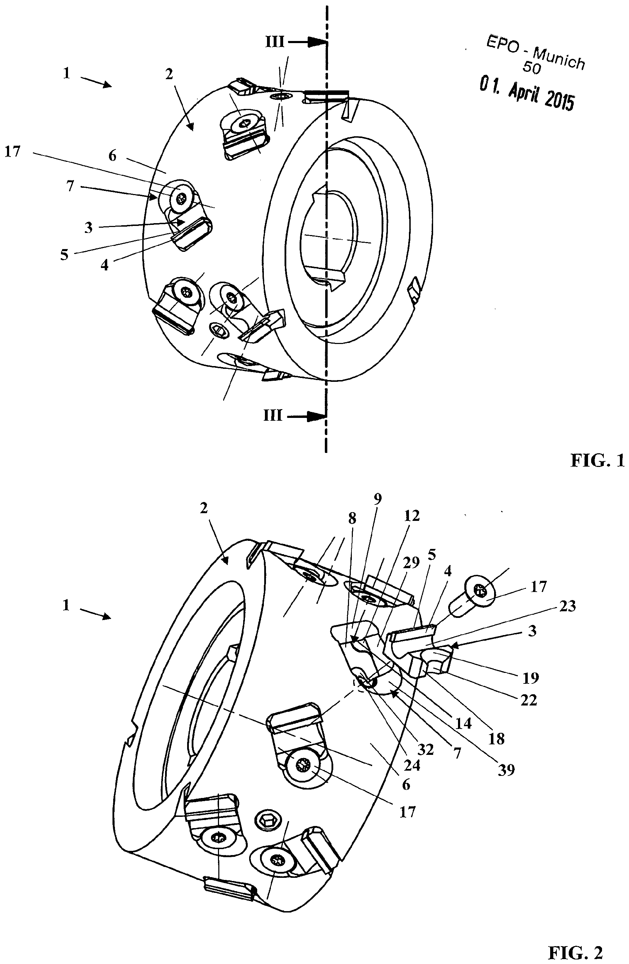

Fig. 1 zeigt in einer perspektivischen Darstellung ein Fräswerkzeug 1 umfassend einen Tragkörper 2 und mehrere Schneidelemente 3. Der Tragkörper 2 weist eine im Wesentlichen zylindrische Außenkontur auf. In der umfangsseitigen Mantelfläche des Tragkörpers 2 sind Aufnahmen 7 angeordnet. Die Aufnahmen 7 sind durch Ausnehmungen in der Oberfläche 6 des Tragkörpers 2 realisiert. Die Oberfläche 6 entspricht der umfangsseitigen Mantelfläche des Tragkörpers 2. In die Aufnahmen 7 des Tragkörpers 2 sind Schneidelemente 3 eingebracht. Das Schneidelement 3 umfasst eine Schneide 4 mit einer Schneidkante 5. Die Schneide 4 ist fest und unbeweglich mit dem Schneidelement 3 verbunden. Die Schneidelemente 3 sind mittels Senkkopfschrauben 17 in den Aufnahmen 7 des Tragkörpers 2 fixiert. In Folge der zylindrischen Außenkontur des Tragkörpers liegen die Schneidkanten 5 der Schneiden 4 auf einer Hüllgeraden, die achsparallel zur Drehachse des Fräswerkzeug 1 verläuft. Es entsteht also eine zylindrische Fräskontur. Natürlich sind im Rahmen der Erfindung auch abweichende Konturen des Tragkörpers 2 beispielsweise mit einer Kegelform und nicht achsparalleler Hüllgeraden sowie mit konvexen, konkaven oder kombinierten Hüllkurven der Schneidkanten 5 möglich.

Fig. 2 zeigt in einer perspektivischen Darstellung das Fräswerkzeug 1 nach Fig. 1, wobei ein Schneidelement 3 und die zugehörige Senkkopfschraube 17 im Sinne einer Explosionsdarstellung aus ihrer Aufnahme 7 herausgenommen dargestellt sind. Die Aufnahme 7 weist Seitenwände 9, 29, 39 und einen Boden 8 auf. Im Bereich der Seitenwand 39 befindet sich im Boden 8 der Aufnahme 7 eine Gewindebohrung 24 zur Aufnahme der Senkkopfschraube 17. Gegenüberliegend der Seitenwand 39 ist die Seitenwand 9 angeordnet. Die Seitenwand 39 und die Seitenwand 9 sind über die Seitenwand 29 und eine in der Fig. 2 nicht dargestellte Seitenwand, die parallel zur Seitenwand 29 verläuft, verbunden.

Am Boden 8 der Aufnahme 7 sind drei Absätze angeordnet, die im Ausführungsbeispiel nach den Fig. 1 bis 4 eine Drei-Punkt-Auflage für das Schneidelement 3 bilden. In der Fig. 2 sind zwei Absätze 12, 32 dieser drei Absätze sichtbar. Der Absatz 32 ist im Bereich der Gewindebohrung 24 angeordnet. Der Absatz 12 ist in dem Bereich des Bodens 8 angeordnet, in dem die Seitenwand 9 und die Seitenwand 29 aufeinandertreffen. Der nicht dargestellte dritte Absatz ist in dem Bereich des Bodens 8 angeordnet, in dem die Seitenwand 9 und die der Seitenwand 29 gegenüberliegende Seitenwand aufeinandertreffen. Auf diese Weise sind zwei Absätze 12 im Bereich der Seitenwand 9 angeordnet und ein Absatz 32 im Bereich der Gewindebohrung 24 und der gegenüberliegenden Seitenwand 39 angeordnet. Die Absätze 12, 32 liegen nicht auf einer gemeinsamen Geraden, sondern spannen ein Dreieck, hier ein gleichschenkliges Dreieck, auf.

Zur Befestigung eines Schneidelements 3 in der Aufnahme 7 wird die Senkkopfschraube 17 in die Gewindebohrung 24 geschraubt und dabei das zu befestigende Schneidelement 3 mit der Senkkopfschraube 17 fixiert. Im befestigten Zustand des Schneidelements 3 ist damit ein Punkt der Drei-Punkt-Auflage im unmittelbaren Bereich der Senkkopfschraube 17, und damit im Bereich des Befestigungselements, angeordnet.

Im befestigten Zustand des Schneidelements 3 liegt die Bodenseite des Schneidelements 3 auf der von den drei Absätzen gebildeten Drei-Punkt-Auflage auf. Die Drei-Punkt-Auflage ist zwischen dem Schneidelement 3 und dem Tragkörper 2 angeordnet und dient zur Positionierung der Schneidkante 5 der Schneide 4 des Schneidelements 3 relativ zum Boden 8 der Aufnahme 7.

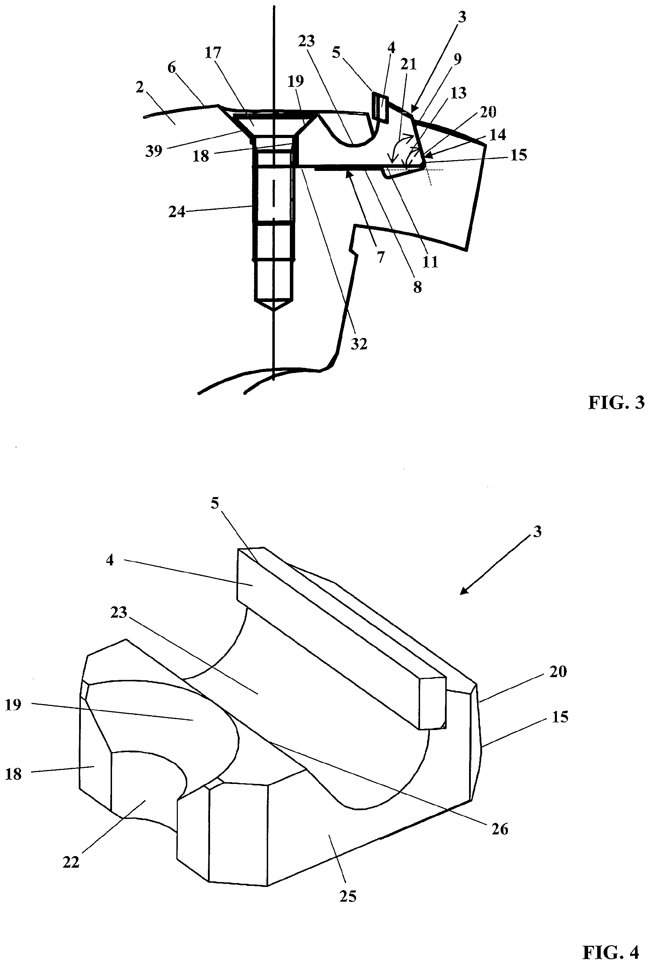

Fig. 3 zeigt eine Teildarstellung eines Schnitts entlang der in Fig. 1 mit III bezeichneten Schnittlinie. Das Schneidelement 3 befindet sich in der Aufnahme 7 und ist mittels der Senkkopfschraube 17 in der Aufnahme 7 befestigt. Die Aufnahme 7 ist durch eine Ausnehmung in der Oberfläche 6 des Tragkörpers 2 realisiert. In den Boden 8 der Aufnahme 7 ist am Rand der Aufnahme 7 im Bereich der Seitenwand 39 eine Gewindebohrung 24 zur Aufnahme der Senkkopfschraube 17 eingebracht. Die der Seitenwand 39 gegenüberliegende Seitenwand 9 der Aufnahme 7 ist in einem Winkel 13 gegen den Boden 8 der Aufnahme 7 orientiert. Der Winkel 13 ist < 90°. Vorteilhaft ist der Winkel 13 < 80°. Durch die Orientierung der Seitenwand 9 der Aufnahme 7 gegen den Boden 8 der Aufnahme 7 in einem Winkel 13 < 90° ist zwischen der Seitenwand 9 und dem Boden 8 ein keilförmiger Raum 14 in der Aufnahme 7 gebildet. Der keilförmige Raum 14 in der Aufnahme 7 liegt der Seitenwand 39 und der Senkkopfschraube 17 gegenüber. Das in die Aufnahme 7 eingebrachte Schneidelement 3 weist eine im gezeigten Querschnitt keilförmige Kante 15 auf, deren Form mit der Form des keilförmigen Raums 14 der Aufnahme 7 korrespondiert. Das Schneidelement 3 umfasst eine Bodenseite 11 und eine Seitenwand 20. Die keilförmige Kante 15 des Schneidelements 3 ist von der Seitenwand 20 und der Bodenseite 11 gebildet. Die Seitenwand 20 und die Bodenseite 11 des Schneidelements 3 schließen einen Winkel 21 ein. Der Winkel 21 ist < 90° und gleich dem Winkel 13, mit dem der Boden 8 der Aufnahme gegen die Seitenwand 9 der Aufnahme orientiert ist. Es kann auch vorgesehen sein, dass der Winkel 21 der keilförmigen Kante 15 des Schneidelements 3 größer ist als der Winkel 13 des keilförmigen Raums 14 der Aufnahme 7.

Das Schneidelement 3 weist eine der keilförmigen Kante 15 gegenüberliegende und entgegengesetzt geneigte keilförmige Druckfläche auf. Im Ausführungsbeispiel nach den Fig. 1 bis 4 ist die keilförmige Druckfläche des Schneidelements 3 durch eine der Form des Kopfes der Senkkopfschraube 17 angepasste, zum Rand 18 des Schneidelements 3 hin offene Senkung 19 in Form eines Kegelabschnitts realisiert. Der Rand 18 des Schneidelements 3 liegt der keilförmigen Kante 15 des Schneidelements 3 gegenüber. Wie in der Fig. 4 zu erkennen, ist in den Rand 18 des Schneidelements 3 eine Ausnehmung 22 eingelassen. Die Ausnehmung 22 besitzt die Form der Innenseite eines Zylinderabschnitts und ist der Form der Senkkopfschraube 17 angepasst.

In Fig. 3 ist zu erkennen, dass das Schneidelement 3 zwischen dem als Senkkopfschraube 17 ausgebildeten Befestigungselement und der Seitenwand 9 der Aufnahme 7 eingeklemmt ist. Die Senkkopfschraube 17 greift an der als offene Senkung 19 ausgebildeten keilförmigen Druckfläche des Schneidelements 3 an und presst das Schneidelement 3 in den keilförmigen Raum 14 der Aufnahme 7 des Tragkörpers 2. Da der Winkel 13 zwischen der Seitenwand 9 und Boden 8 der Aufnahme 7 < 90° ist, wird das Schneidelement 3 hierbei über die Seitenwand 9 auch im Bereich des keilförmigen Raums 14 der Aufnahme 7 gegen den Boden 8 der Aufnahme 7 gedrückt. Das Schneidelement 3 liegt dann auf den drei am Boden 8 der Aufnahme 7 angeordneten Absätzen auf. Durch die Wechselwirkung der keilförmigen Spitze 15 des Schneidelements 3 und des keilförmigen Raums 14 der Aufnahme 7 wird das Schneidelement 3 durch die eine Senkkopfschraube 17 nicht nur im Bereich der Senkkopfschraube 17 gegen den im Bereich der Senkkopfschraube 17 angeordneten Absatz 32 gedrückt, sondern auch gegen den in Fig. 2 dargestellten Absatz 12 und den in Fig. 2 nicht dargestellten Absatz zwischen der Seitenwand 9 und der der Seitenwand 29 gegenüberliegenden Seitenwand gedrückt. Auf diese Weise wird das Schneidelement 3 mit einer einzelnen Senkkopfschraube 17 gegen alle drei Punkte der Drei-Punkt-Auflage gedrückt. Dadurch ist die Position des Schneidelementes 3 in allen räumlichen Freiheitsgraden exakt gegenüber dem Tragkörper 2 festgelegt. Dies gilt insbesondere auch für den Abstand der Schneidkante 5 der Schneide 4 des Schneidelements 3 zum Boden 8 der Aufnahme 7, der auf diese Weise definiert festgelegt ist. Auch wenn das Schneidelement 3 durch ein baugleiches Schneidelement ersetzt wird, ist der Abstand zwischen der Schneidkante dieses Austauschschneidelements zum Boden 8 der Aufnahme 7 derselbe wie vorher für das andere Schneidelement 3. Hierzu ist es lediglich notwendig, dass sich an den drei Absätzen am Boden 8 der Aufnahme 7 keine Rückstände befinden. Die Drei-Punkt-Auflage ermöglicht bei gleichen Fertigungsfehlertoleranzen eine viel genauere und viel reproduzierbarere Positionierung des Schneidelements 3 und der zugehörigen Schneidkante 5 relativ zum Boden 8 der Aufnahme 7 des Tragkörpers 2 als die Positionierung eines Schneidelements, das flächig auf dem Boden einer Aufnahme aufliegt.

Die Fig. 4 zeigt in perspektivischer Darstellung ein Schneidelement 3 aus den Fig. 1 bis 3. Gegenüberliegend zur nicht gezeigten Bodenseite des Schneidelements 3 ist eine Spanleitausnehmung 23 angeordnet. Die Spanleitausnehmung 23 ist durch eine im Wesentlichen teilzylinderförmige Ausnehmung im Grundkörper des Schneidelementes 3 gebildet. Die Längsrichtung dieses zylinderförmigen Hohlraumes erstreckt sich parallel zu der Seitenwand 20 des Schneidelements 3 und parallel zum Rand 18 des Schneidelements 3, und damit parallel zur Schneidkante 5. Der Rand 18 und die Seitenwand 20 sind über eine Seitenwand 25 und eine nicht gezeigte, der Seitenwand 25 gegenüberliegende Seitenwand miteinander verbunden. Die Spanleitausnehmung 23 ist zu der Seitenwand 25 und der ihr gegenüberliegenden nicht gezeigten Seitenwand hin offen. Im eingebauten Zustand des Schneidelements 3 ist die Spanleitausnehmung 23 zu der in Fig. 3 gezeigten Oberfläche 6 des Tragkörpers 2 hin geöffnet. An dem dem Rand 18 des Schneidelements 3 gegenüberliegenden Rand der Öffnung der Spanleitausnehmung 23 ist eine Schneide 4 mit einer Schneidkante 5 angeordnet. Die Schneidkante 5 steht über den Rand der Öffnung der Spanleitausnehmung 23 hervor. Die Spanleitausnehmung 23 weist einen zweiten Rand auf, der dem Rand 18 des Schneidelements 3 näher liegt und an dem eine Kante 26 ausgebildet ist. Von einem Werkstück durch die Schneidekante 5 der Schneide 4 abgetrennte Späne werden zunächst in den zylinderförmigen Hohlraum der Spanleitausnehmung 23 geleitet und dann über die Kante 26 der Spanleitausnehmung 23 wieder vom Schneidelement 3 und vom Fräswerkzeug 1 weg geleitet. Der Spanleitraum ist allein durch die Spanleitausnehmung 23 des Schneidelements 3 ausgebildet. Hierdurch ist weitgehend vermieden, dass sich Späne in Zwischenräumen zwischen dem Schneidelement und der Aufnahme des Tragkörpers bei Ausbildung eines Spanleitraumes sowohl aus Teilen des Schneidelements als auch aus Teilen der Aufnahme festsetzen. Dies erleichtert die Reinigung der einzelnen Teile des Fräswerkzeugs 1 vor dem Einbringen eines Schneidelements 3 in eine Aufnahme 7 des Tragkörpers 2.

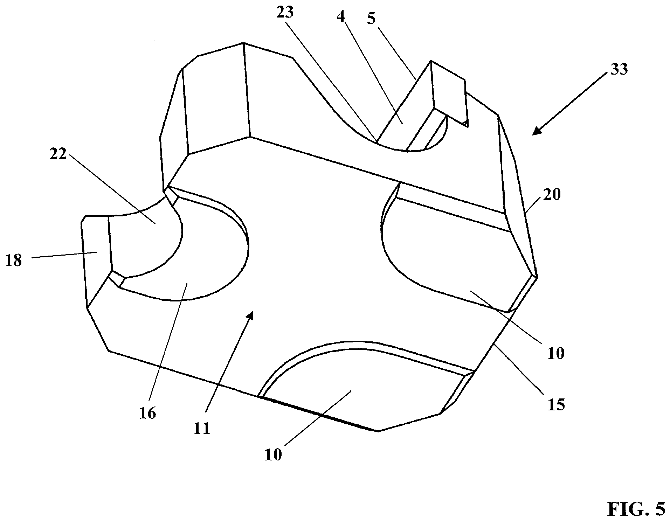

Die Fig. 5 zeigt in perspektivischer Darstellung eine alternative Ausführungsform des Schneidelements 3 nach dem Ausführungsbeispiel der Fig. 1 bis 4. Das in Fig. 5 gezeigte Schneidelement 33 unterscheidet sich vom Schneidelement 3 nach den Fig. 1 bis 4 dadurch, dass an der Bodenseite 11 des Schneidelements 33 drei Füße festgelegt sind. Sich entsprechende Teile sind wie in allen Figuren der Zeichnung mit gleichen Bezugszeichen bezeichnet. Das Schneidelement 33 weist eine zum Rand 18 des Schneidelements 33 hin offene Ausnehmung 22 zur Aufnahme eines Befestigungselements auf. Die Ausnehmung 22 erfasst einen Fuß 16 des Schneidelements 33. Der Fuß 16 ist an der Bodenseite 11 des Schneidelements 33 im Bereich der Ausnehmung 22 angeordnet. Im in eine Ausnehmung 7 des Tragkörpers 2 des Fräswerkzeugs 1 nach den Fig. 1 bis 3 eingebauten Zustand des Schneidelements 33 umgreift der Fuß 16 des Schneidelements 33 teilweise die als Befestigungselement verwendete Senkkopfschraube 17.

Zwei weitere Füße 10 sind an der dem Fuß 16 gegenüberliegenden Seite der Bodenseite 11 angeordnet. Die beiden Füße 10 sind im Bereich der Seitenwand 15 des Schneidelements 33 angeordnet. Wie auch beim Schneidelement 3 nach den Fig. 1 bis 4 liegt die Seitenwand 15 dem Rand 18 des Schneidelements 33 gegenüber. Die drei Füße 10, 16 an der Bodenseite 11 des Schneidelements 33 dienen zur Bildung der Drei-Punkt-Auflage. Hierbei kann die Drei-Punkt-Auflage sowohl ausschließlich durch die drei Füße 10, 16 gebildet sein, als auch durch die drei Füße 10, 16 und die in der Fig. 2 gezeigten Absätze 12, 32 am Boden 8 der Aufnahme 7 des Tragkörpers 2 des Fräswerkzeugs 1. Jedenfalls korrespondieren die Positionen der Füße 10, 16 mit den Positionen der Absätze 12, 32.

Das in den Fig. 1 bis 4 gezeigte Schneidelement 3 kann genauso gut als Schneidelement 33 nach der Fig. 5 mit Füßen 10, 16 ausgebildet sein. Eine Bildung einer Drei-Punkt-Auflage durch Füße 10, 16 an einem Schneidelement 33 und Absätze 12, 32 in der Aufnahme 7 hat den Vorteil, dass eine Reinigung des Schneidelements 33 und der Aufnahme 7 vor einem Einbau des Schneidelements 33 in die Aufnahme 7 nur an jeweils drei Punkten erfolgen muss. Es genügt, die drei Füße 10, 16 des Schneidelements 33 zu reinigen und die drei Absätze 12, 32 der Aufnahme 7 zu reinigen. Dann ist bereits eine reproduzierbare Positionierung eines Schneidelements 33 in der Aufnahme 7 möglich. Ebenso ist es möglich, ein baugleiches Schneidelement gleich in der Aufnahme 7 zu positionieren wie zuvor das Schneidelement 33.

Es kann aber auch vorgesehen sein, das Schneidelement 33 nach der Fig. 5 in einem Fräswerkzeug mit einem Tragkörper mit Aufnahmen ohne Absätze zu verwenden. Ein solcher Tragkörper kann baugleich mit dem in Fig. 2 gezeigten Tragkörper 2 ausgebildet sein, nur dass am Boden 8 der Aufnahme 7 überhaupt keine Absätze 12, 32 vorgesehen sind und der Boden 8 eben ausgebildet ist. Die Drei-Punkt-Auflage wird dann ausschließlich durch die drei Füße 10, 16 des Schneidelements 33 gebildet.

## Patentansprüche

1. Fräswerkzeug umfassend einen Tragkörper (2) und mindestens ein Schneidelement (3, 33), wobei das Schneidelement (3, 33) eine Schneide (4) mit einer Schneidkante (5) aufweist, wobei der Tragkörper (2) an seiner Oberfläche (6) eine Aufnahme (7) für das Schneidelement (3) aufweist, und wobei die Aufnahme (7) einen Boden (8) aufweist,
**dadurch gekennzeichnet, dass**
zur Positionierung der Schneidkante (5) relativ zum Boden (8) der Aufnahme (7) eine Drei-Punkt-Auflage zwischen Schneidelement (3, 33) und Tragkörper (2) angeordnet ist,
dass die Aufnahme (7) mindestens eine Seitenwand (9) aufweist, die in einem Winkel (13) < 90° gegen den Boden (8) der Aufnahme (7) orientiert ist und einen keilförmigen Raum (14) bildet, dass das Schneidelement (3, 33) eine keilförmige Spitze (15) aufweist, deren Form mit der Form des keilförmigen Raums (14) der Aufnahme (7) korrespondiert, dass das Schneidelement (3, 33) eine der keilförmigen Spitze (15) gegenüberliegende keilförmige Druckfläche aufweist, dass das Fräswerkzeug (1) ein Befestigungselement zur Befestigung des mindestens einen Schneidelements (3, 33) umfasst, und dass das Befestigungselement derart an der keilförmigen Druckfläche des Schneidelements (3, 33) angreift und das Schneidelement (3, 33) in den keilförmigen Raum (14) der Aufnahme (7) presst, dass das Schneidelement (3, 33) auch über die Seitenwand (9) gegen den Boden (8) der Aufnahme (7) gedrückt wird.

2. Fräswerkzeug nach Anspruch 1,
**dadurch gekennzeichnet, dass** die Drei-Punkt-Auflage drei Füße (10, 16) an einer Bodenseite (11) des Schneidelements (33) umfasst.

3. Fräswerkzeug nach Anspruch 1 oder 2,
**dadurch gekennzeichnet, dass** die Drei-Punkt-Auflage drei Absätze (12) am Boden (8) der Aufnahme (7) des Tragkörpers (2) umfasst.

4. Fräswerkzeug nach einem der Ansprüche 1 bis 3,
**dadurch gekennzeichnet, dass** das Befestigungselement eine Senkkopfschraube (17) ist, und dass die keilförmige Druckfläche des Schneidelements (3, 33) eine der Form des Kopfes der Senkkopfschraube (17) angepasste, zum Rand (18) des Schneidelements (3) hin offene Senkung (19) in Form eines Kegelabschnitts ist.

5. Fräswerkzeug nach einem der Ansprüche 1 bis 4,
**dadurch gekennzeichnet, dass** ein Punkt der Drei-Punkt-Auflage im Bereich des Befestigungselements angeordnet ist.

6. Schneidelement zur Verwendung in einem Fräswerkzeug (1) nach einem der Ansprüche 1 bis 5,
wobei das Schneidelement (33) Seitenwände (20) und an seiner Bodenseite (11) drei Füße (10, 16) zur Bildung der Drei-Punkt-Auflage aufweist,
**dadurch gekennzeichnet, dass** mindestens eine Seitenwand (20) des Schneidelements (33) in einem Winkel (21) < 90° gegen die Bodenseite (11) des Schneidelements (3) orientiert ist, wodurch das Schneidelement (33) eine im Querschnitt keilförmige Kante (15) aufweist, und dass das Schneidelement (33) eine der keilförmigen Kante (15) gegenüberliegende keilförmige Druckfläche aufweist.

7. Schneidelement nach Anspruch 6,
**dadurch gekennzeichnet, dass** das Schneidelement (33) eine zum Rand (18) des Schneidelements (33) hin offene Ausnehmung (22) für das Befestigungselement aufweist, und dass die Ausnehmung (22) einen Fuß (16) des Schneidelements (33) erfasst.

8. Schneidelement nach Anspruch 6 oder 7,
**dadurch gekennzeichnet, dass** im Schneidelement (33) eine Spanleitausnehmung (23) ausgebildet ist, deren Öffnung im eingebauten Zustand des Schneidelements (3) zur Oberfläche (6) des Tragkörpers (2) hin geöffnet ist.

## Claims

1. Milling tool, comprising a support body (2) and at least one cutting element (3, 33), wherein the cutting element (3, 33) has a cutter (4) with a cutting edge (5), wherein the support body (2) has a receptacle (7) for the cutting element (3) on its surface (6), and wherein the receptacle (7) has a base (8),
**characterised in that** a three-point support is provided between the cutting element (3, 33) and the support body (2) for positioning the cutting edge (5) relative to the base (8) of the receptacle (7), **in that** the receptacle (7) has at least one side wall (9), which is oriented at an angle (13) <90° against the base (8) of the receptacle (7) and forms a conical space (14), **in that** the cutting element (3, 33) has a conical point (15), the shape of which corresponds to the shape of the conical space (14) of the receptacle (7), **in that** the cutting element (3, 33) has a conical contact surface located opposite the conical point (15), **in that** the milling tool (1) comprises a fastening element for fastening the at least one cutting element (3, 33), and **in that** the fastening element acts on the conical contact surface of the cutting element (3, 33) and pushes the cutting element (3, 33) into the conical space (14) of the receptacle (7) in such a way that the cutting element (3, 33) is also pushed against the base (8) of the receptacle (7) via the side wall (9).

2. Milling tool according to claim 1,
**characterised in that** the three-point support comprises three feet (10, 16) on a base side (11) of the cutting element (33).

3. Milling tool according to claim 1 or 2,
**characterised in that** the three-point support comprises three offsets (12) at the base (8) of the receptacle (7) of the support body (2).

4. Milling tool according to any of claims 1 to 3,
**characterised in that** the fastening element is a countersunk bolt (17) and the conical contact surface of the cutting element (3, 33) is a countersink (19) in the form of a conical section, which matches the shape of the head of the countersunk bolt (17) and is open towards the edge (18) of the cutting element (3).

5. Milling tool according to any of claims 1 to 4,
**characterised in that** a point of the three-point support is located in the region of the fastening element.

6. Cutting element for use in a milling tool (1) according to any of claims 1 to 5, wherein the cutting element (33) has side walls (20) and three feet (10, 16) on a base side (11) to form the three-point support,
**characterised in that** at least one side wall (20) of the cutting element (33) is oriented at an angle (21) <90° against the base side (11) of the cutting element (3), so that the cutting element (33) has an edge (15) which is conical in cross-section, and **in that** the cutting element (33) has a contact surface lying opposite the conical edge (15).

7. Cutting element according to claim 6,
**characterised in that** the cutting element (33) has a recess (22) open towards the edge (18) of the cutting element (33) for the fastening element, and **in that** the recess (22) accommodates a foot (16) of the cutting element (33).

8. Cutting element according to claim 6 or 7,
**characterised in that** in the cutting element (33) there is formed a chip guiding recess (23), the opening of which is open towards the surface (6) of the support body (2) in the installed state of the cutting element (3).

## Revendications

1. Outil de fraisage comprenant un corps de support (2) et au moins un élément de coupe (3, 33), l'élément de coupe (3, 33) présentant un tranchant (4) avec une arête de coupe (5), le corps de support (2) présentant sur sa surface (6) un logement (7) pour l'élément de coupe (3), et le logement (7) présentant un fond (8),
**caractérisé en ce que** pour le positionnement de l'arête de coupe (5) par rapport au fond (8) du logement (7), un appui en trois points est disposé entre l'élément de coupe (3, 33) et le corps de support (2), **en ce que** le logement (7) présente au moins une paroi latérale (9) qui est orientée suivant un angle (13) < 90° par rapport au fond (8) du logement (7) et qui forme un espace cunéiforme (14), **en ce que** l'élément de coupe (3, 33) présente une pointe cunéiforme (15) dont la forme correspond à celle de l'espace cunéiforme (14) du logement (7), **en ce que** l'élément de coupe (3, 33) présente une surface de pression cunéiforme opposée à la pointe cunéiforme (15), **en ce que** l'outil de fraisage (1) comprend un élément de fixation pour la fixation du ou des éléments de coupe (3, 33), et **en ce que** l'élément de fixation agit de telle sorte sur la surface de pression cunéiforme de l'élément de coupe (3, 33) et presse ce dernier de telle sorte dans l'espace cunéiforme (14) du logement (7) que ledit élément de coupe (3, 33) est également poussé par l'intermédiaire de la paroi latérale (9) contre le fond (8) du logement (7).

2. Outil de fraisage selon la revendication 1,
**caractérisé en ce que** l'appui en trois points comprend trois embases (10, 16) sur un côté inférieur (11) de l'élément de coupe (33).

3. Outil de fraisage selon la revendication 1 ou 2,
**caractérisé en ce que** l'appui en trois points comprend trois épaulements (12) sur le fond (8) du logement (7) du corps de support (2).

4. Outil de fraisage selon l'une des revendications 1 à 3,
**caractérisé en ce que** l'élément de fixation est une vis à tête fraisée (17) et **en ce que** la surface de pression cunéiforme de l'élément de coupe (3, 33) est une fraisure (19) en forme de section conique, qui est adaptée à la forme de la tête de la vis à tête fraisée (17) et qui est ouverte vers le bord (18) de l'élément de coupe (3).

5. Outil de fraisage selon l'une des revendications 1 à 4,
**caractérisé en ce qu'**un point de l'appui en trois points est disposé dans la zone de l'élément de fixation.

6. Elément de coupe à utiliser dans un outil de fraisage (1) selon l'une des revendications 1 à 5, l'élément de coupe (33) présentant des parois latérales (20) et, sur son côté inférieur (11), trois embases (10, 16) pour former l'appui en trois points,
**caractérisé en ce qu'**au moins une paroi latérale (20) de l'élément de coupe (33) est orientée suivant un angle (21) < 90° par rapport au côté inférieur (11) de l'élément de coupe (3), moyennant quoi l'élément de coupe (33) présente une arête à section cunéiforme (15), et **en ce que** l'élément de coupe (33) présente une surface de pression cunéiforme opposée à l'arête cunéiforme (15).

7. Elément de coupe selon la revendication 6,
**caractérisé en ce que** l'élément de coupe (33) présente un évidement (22), pour l'élément de fixation, qui est ouvert en direction du bord (18) de l'élément de coupe (33), et **en ce que** l'évidement (22) comprend une embase (16) de l'élément de coupe (33).

8. Elément de coupe selon la revendication 6 ou 7,
**caractérisé en ce qu'**il est prévu, formé dans l'élément de coupe (33), un évidement d'évacuation de copeaux (23) dont l'ouverture est ouverte, à l'état monté de l'élément de coupe (3), en direction de la surface (6) du corps de support (2).
